# EUROPÄISCHE PATENTSCHRIFT

(11) **EP 3 009 625 B1**
(45) Veröffentlichungstag und Bekanntmachung des Hinweises auf die Patenterteilung: **28.10.2020**
(21) Anmeldenummer: 15002403.2
(22) Anmeldetag: 13.08.2015
(51) Int. Cl.: F01P 7/16, F02B 29/04, F02G 5/02

(54) **KÜHLSYSTEM FÜR EIN FAHRZEUG, INSBESONDERE FÜR EIN NUTZFAHRZEUG**
COOLING SYSTEM FOR A VEHICLE, IN PARTICULAR A COMMERCIAL VEHICLE
SYSTEME DE REFROIDISSEMENT POUR UN VEHICULE, NOTAMMENT POUR UN VEHICULE UTILITAIRE

(30) Priorität: 18.10.2014 DE 102014015457
(43) Veröffentlichungstag der Anmeldung: 20.04.2016
(73) Patentinhaber: MAN Truck & Bus SE, 80995 München (DE)
(72) Erfinder: Swoboda, Jan, 81249 München (DE); Bernath, Michael, 80637 München (DE); Karl, Christian, 80995 München (DE)
(74) Vertreter: Liebl, Thomas

(56) Entgegenhaltungen:
- EP-A1- 2 274 507
- EP-A2- 2 196 661
- WO-A1-2014/181824
- WO-A1-2015/064301
- CN-A- 103 352 772
- DE-A1-102009 006 959
- DE-A1-102014 019 097
- JP-A- 2005 042 618

## Beschreibung

Die Erfindung betrifft ein Kühlsystem für ein Fahrzeug, insbesondere für ein Nutzfahrzeug, nach dem Oberbegriff des Patentanspruches 1, ein Verfahren zum Betreiben eines Kühlsystems für ein Fahrzeug, insbesondere für ein Nutzfahrzeug, nach dem Oberbegriff des Patentanspruches 15.

Es ist bei Fahrzeugen, insbesondere bei Nutzfahrzeugen, bekannt, ein Energie-Rückgewinnungs-System vorzusehen, mittels dem aus einer Abwärme einer Brennkraftmaschine des Fahrzeuges beispielsweise mechanische und/oder elektrische Energie gewonnen bzw. erzeugt werden kann. Diese Energie kann beispielsweise für den Antrieb des Fahrzeuges verwendet werden. Üblicherweise ist das Energie-Rückgewinnungs-System dabei derart ausgebildet, dass dieses einen wärmezuführenden Wärmetauscher, mittels dem die Abwärme der Brennkraftmaschine dem Energie-Rückgewinnungs-System zuführbar ist, und einen wärmeabführenden Wärmetauscher aufweist, so dass die Energie beispielsweise mittels eines Dampfkreisprozesses oder mittels thermoelektrischer Generatoren erzeugt bzw. gewandelt werden kann. Um in einem derartigen System einen hohen Wirkungsgrad zu erreichen, ist es notwendig, die Temperaturdifferenz zwischen dem wärmezuführenden Wärmetauscher und dem wärmeabführenden Wärmetauscher möglichst groß auszubilden. Es ist daher auch bekannt, neben einem Hoch-Temperatur-Kühlkreislauf für die Brennkraftmaschine des Fahrzeuges auch einen zusätzlichen Niedrig-Temperatur-Kühlkreislauf speziell zur Kühlung des wärmeabführenden Wärmetauschers des Energie-Rückgewinn-Systems an dem Fahrzeug vorzusehen.

Aus der WO 2012/115572 A1 geht beispielhaft ein Fahrzeug mit einem System zur Umwandlung von thermischer Energie in mechanische Energie hervor, bei dem in einer bevorzugten Ausführung ein Hoch-Temperatur-Kühlkreislauf zur Kühlung einer Brennkraftmaschine des Fahrzeuges und ein von dem Hoch-Temperatur-Kühlkreislauf getrennter zusätzlicher Niedrig-Temperatur-Kühlkreislauf zur Kühlung eines wärmeabführenden Wärmetauschers eines Energie-Rückgewinnungs-Systems, mittels dem aus einem Abgas der Brennkraftmaschine mechanische Energie erzeugt werden kann, vorgesehen sind. Das Fahrzeug weist hier zudem auch einen Abgasturbolader zur Verdichtung einer Verbrennungsluft der Brennkraftmaschine und einen stromab des Abgasturboladers in einem Verbrennungsluft-Ansaugtrakt angeordneten, luftgekühlten Ladeluftkühler zur Kühlung der verdichteten Verbrennungsluft auf.

Ein Kühlsystem für ein Fahrzeug mit kombinierten Hoch-Temperatur Kühlkreislauf und Niedrig - Temperatur Kühlkreislauf ist aus EP2196661 bekannt.

Aufgabe der Erfindung ist es, ein Kühlsystem für ein Fahrzeug, insbesondere für ein Nutzfahrzeug und ein Verfahren zum Betreiben eines Kühlsystems für ein Fahrzeug, insbesondere für ein Nutzfahrzeug, bereitzustellen, mittels denen eine besonders effektive Kühlung und ein kostengünstiger Aufbau realisiert wird.

Diese Aufgabe wird durch die Merkmale der unabhängigen Ansprüche gelöst. Bevorzugte Weiterbildungen sind in den Unteransprüchen offenbart.

Die Erfindung betrifft ein Kühlsystem für ein Fahrzeug gemäß Anspruch 1 oder 4.

Auf diese Weise ist das Kühlsystem besonders effektiv und kostengünstig ausgebildet, da nun auch der wenigstens eine Ladeluftkühler flüssigkeitsgekühlt werden kann, ohne hierzu einen zusätzlichen bzw. getrennten Kühlkreislauf vorsehen zu müssen. Die Kühlung des wenigstens einen Ladeluftkühlers und des wärmeabführenden Wärmetauschers mittels des Niedrig-Temperatur-Kühlkreislaufs ist besonders vorteilhaft, da diese somit nicht von dem wärmeren HT-Kühlkreislauf gekühlt werden und daher eine besonders effektive Kühlung dieser Komponenten gewährleistet wird. Des Weiteren kann der NT-Kühlkreislauf hier auch besonders effektiv genutzt werden, da sowohl der Ladeluftkühler als auch der wärmeabführende Wärmetauscher mittels des NT-Kühlkreislaufs gekühlt werden. So wird sichergestellt wird, dass mittels des NT-Kühlkreislaufs stets ein hoher Wärmestrom abgeführt wird.

Des Weiteren sind die Begrifflichkeiten HT-Kühlkreislauf und NT-Kühlkreislauf hier ausdrücklich derart auszulegen, dass die Temperatur des NT-Kühlkreislaufs vorwiegend bzw. im Durchschnitt niedriger ist als die Temperatur des HT-Kühlkreislaufs. Die Temperatur des NT-Kühlkreislaufs kann daher für kurze Zeitintervalle auch gleich oder höher sein als die Temperatur des HT-Kühlkreislaufs.

Zudem ist die ER-Einrichtung ausdrücklich nicht auf die Erzeugung von mechanischer oder elektrischer Energie beschränkt. Ebenso können mittels der ER-Einrichtung auch sämtliche weiteren Formen von Energie, beispielsweise pneumatische oder hydraulische Energie, erzeugt werden.

Weiter wird vorzugsweise das Abgas der Brennkraftmaschine als Abwärmequelle bzw. die im Abgas der Brennkraftmaschine gespeicherte Abwärme der Brennkraftmaschine, zur Erzeugung der Energie mittels der ER-Einrichtung verwendet, um die Abwärme der Brennkraftmaschine auf besonders einfache und effektive Weise nutzen zu können. Ebenso wäre es natürlich auch denkbar, jede anderweitig gespeicherte bzw. verfügbare Abwärme der Brennkraftmaschine, beispielsweise von Zylinderaußenwandbereichen der Brennkraftmaschine, zur Erzeugung der Energie zu verwenden.

In einer besonders bevorzugten Ausführung des erfindungsgemäßen Kühlsystems ist der wärmeabführende Wärmetauscher der ER-Einrichtung stromauf des wenigstens einen Ladeluftkühlers in dem NT-Kühlkreislauf angeordnet und stromauf des wenigstens einen Ladeluftkühlers wenigstens ein den NT-Kühlkreislauf kühlender Wärmetauscher in dem NT-Kühlkreislauf angeordnet. Dadurch wird der wenigstens eine Ladeluftkühler stets maximal gekühlt und somit ein besonders hoher Wirkungsgrad des Verbrennungsprozesses der Brennkraftmaschine erreicht.

Erfindungsgemäß sind der HT-Kühlkreislauf und der NT-Kühlkreislauf strömungstechnisch miteinander verbunden und bilden einen kombinierten Kühlkreislauf aus. Dabei ist wenigstens eine Fördereinrichtung, insbesondere eine Kühlmittelpumpe, vorgesehen, mittels der ein Kühlmittel des kombinierten Kühlkreislauf durch den kombinierten Kühlkreislauf gefördert werden kann. Mittels des kombinierten Kühlkreislaufs können der HT-Kühlkreislauf und der NT-Kühlkreislauf besonders kostengünstig ausgebildet werden, da beispielsweise einzelne Komponenten des HT-Kühlkreislaufs und des NT-Kühlkreislaufs nicht mehrfach bzw. doppelt verbaut werden müssen. Besonders bevorzugt kann dabei das Kühlmittel mittels einer einzigen Fördereinrichtung durch den kombinierten Kühlkreislauf gefördert werden, um den Kühlkreislauf besonders kostengünstig auszubilden.

Erfindungsgemäß ist eine Ventileinrichtung vorgesehen, mittels der der Kühlmittelstrom durch den kombinierten Kühlkreislauf gesteuert und/oder geregelt werden kann, wobei in einer ersten Ventilstellung der Ventileinrichtung der Kühlmittelstrom durch den HT-Kühlkreislauf freigegeben und der Kühlmittelstrom durch den NT-Kühlkreislauf gesperrt ist, und wobei in einer zweiten Ventilstellung der Ventileinrichtung der Kühlmittelstrom durch den HT-Kühlkreislauf und der Kühlmittelstrom durch den NT-Kühlkreislauf freigegeben sind. Auf diese Weise kann der NT-Kühlkreislauf je nach Bedarf gesperrt oder freigegeben werden. Das Sperren des NT-Kühlkreislaufs ist beispielsweise bei einem Kaltstart der Brennkraftmaschine von Vorteil, da sich die Brennkraftmaschine dadurch deutlich schneller erwärmen kann. So kann die Motorreibleistung verringert, Kraftstoff eingespart und auch die Heizung für die Fahrzeuginsassen schneller in Gang gebracht werden.

Bevorzugt ist eine Bypass-Einrichtung vorgesehen, mittels der der wärmeabführende Wärmetauscher der ER-Einrichtung derart strömungstechnisch mit dem HT-Kühlkreislauf verbunden werden kann, dass der wärmeabführende Wärmetauscher der ER-Einrichtung mittels des HT-Kühlkreislaufs gekühlt werden kann, wobei in der ersten und zweiten Ventilstellung der Ventileinrichtung der Kühlmittelstrom durch die Bypass-Einrichtung gesperrt ist und wobei in einer dritten Ventilstellung der Ventileinrichtung der Kühlmittelstorm durch den HT-Kühlkreislauf und durch die Bypass-Einrichtung freigegeben ist und der Kühlmittelstrom durch den NT-Kühlkreislauf gesperrt ist. Mittels einer derartigen Bypass-Einrichtung ist es möglich, den wärmeabführenden Wärmetauscher der ER-Einrichtung auch bei gesperrten NT-Kühlkreislauf zu kühlen und eine durchgehende Kühlung des wärmeabführenden Wärmetauschers sicherzustellen. Insbesondere bei einem Kaltstart der Brennkraftmaschine hat dies den zusätzlichen Vorteil, dass durch den Wärmeeintrag der ER-Einrichtung in den HT-Kühlkreislauf die Brennkraftmaschine schneller aufgeheizt wird. Zusätzlich kann in einer vierten Ventilstellung der Ventileinrichtung der Kühlmittelstrom durch den HT-Kühlkreislauf, durch die Bypass-Einrichtung und durch den NT-Kühlkreislauf freigegeben sein.

Besonders bevorzugt ist dabei jedem Ladeluftkühler jeweils eine weitere Bypass-Einrichtung zugeordnet, mittels der der Kühlmittelstrom an dem Ladeluftkühler vorbeigeführt und/oder vorbeigeleitet werden kann. Jedem Ladeluftkühler ist dann eine Ladeluftkühler-Ventileinrichtung zugeordnet, die in einer ersten Ventilstellung den Kühlmittelstrom durch den Ladeluftkühler freigibt und den Kühlmittelstrom durch die weitere Bypass-Einrichtung sperrt und in einer zweiten Ventilstellung den Kühlmittelstrom durch den Ladeluftkühler sperrt und den Kühlmittelstrom durch die weitere Bypass-Einrichtung freigibt, wobei bevorzugt vorgesehen ist, dass die Ladeluftkühler-Ventileinrichtung als, insbesondere stufenlos verstellbares, Mehrwege-Ventil ausgebildet ist. Auf diese Weise kann der Kühlmittelstrom an dem Ladeluftkühler vorbeigeführt bzw. vorbeigeleitet werden, wenn er momentan nicht mittels des NT-Kühlkreislaufs gekühlt werden soll.

In einer weiteren bevorzugten Ausführung ist eine Bypass-Einrichtung vorgesehen, mittels der der Kühlmittelstrom in dem NT-Kühlkreislauf an einem den wenigstens einen Ladeluftkühler aufweisenden Ladeluftkühler-Bereich des NT-Kühlkreislaufs vorbeigeführt und/oder vorbeigeleitet werden kann, wobei der Kühlmittelstrom durch die weitere Bypass-Einrichtung in der ersten und zweiten Ventilstellung der Ventileinrichtung gesperrt ist, und wobei in einer dritten Ventilstellung der Ventileinrichtung der Kühlmittelstrom durch den HT-Kühlkreislauf, durch den NT-Kühlkreislauf und durch die Bypass-Einrichtung freigegeben ist. So kann der wärmeabführende Wärmetauscher der ER-Einrichtung auch dann mittels des NT-Kühlkreislaufs gekühlt werden, wenn der Kühlmittelstrom durch den Ladeluftkühler-Bereich des NT-Kühlkreislaufs gesperrt ist oder nur ein geringer Kühlmittelstrom durch den Ladeluftkühler-Bereich gefördert werden kann.

Dann ist in der dritten Ventilstellung der Ventileinrichtung der Kühlmittelstrom durch den Ladeluftkühler-Bereich ebenfalls freigegeben, um den wenigstens einen Ladeluftkühler zumindest mit einem Teil des Kühlmittelstroms durch den NT-Kühlkreislauf zu kühlen. Alternativ kann in der dritten Ventilstellung der Ventileinrichtung der Kühlmittelstrom durch den Ladeluftkühler-Bereich auch gesperrt sein, um den wärmeabführenden Wärmetauscher der ER-Einrichtung in dieser Ventilstellung mit dem vollen Kühlmittelstrom kühlen zu können. Vorzugsweise ist zudem, sofern mehrere Ladeluftkühler vorgesehen sind, jedem Ladeluftkühler jeweils eine weitere Bypass-Einrichtung zugeordnet, mittels der der Kühlmittelstrom an dem Ladeluftkühler vorbeigeführt und/oder vorbeigeleitet werden kann. Jedem Ladeluftkühler ist dann eine Ladeluftkühler-Ventileinrichtung zugeordnet, die in einer ersten Ventilstellung den Kühlmittelstrom durch den Ladeluftkühler freigibt und den Kühlmittelstrom durch die weitere Bypass-Einrichtung sperrt und in einer zweiten Ventilstellung den Kühlmittelstrom durch den Ladeluftkühler sperrt und den Kühlmittelstrom durch die weitere Bypass-Einrichtung freigibt. Auf diese Weise kann jeder Ladeluftkühler bedarfsweise gekühlt werden oder nicht. Bevorzugt ist die Ladeluftkühler-Ventileinrichtung dabei als, insbesondere stufenlos verstellbares, Mehrwege-Ventil ausgebildet, um die Ladeluftkühler-Ventileinrichtung einfach und funktionsoptimiert auszubilden.

Alternativ kann jedem Ladeluftkühler jeweils eine Ladeluftkühler-Ventileinrichtung zugeordnet sein, mittels der der Kühlmittelstrom durch den Ladeluftkühler freigegeben und gesperrt werden kann. Dadurch kann der Kühlmittelstrom durch den Ladeluftkühler auf besonders einfache Weise gesperrt werden, wenn der Ladeluftkühler nicht gekühlt werden soll. Bevorzugt ist die Ladeluftkühler-Ventileinrichtung dabei als, insbesondere stufenlos verstellbares, Durchgangsventil, insbesondere als Thermostat ausgebildet, um die Ladeluftkühler-Ventileinrichtung einfach auszubilden.

Konkret kann die Ventileinrichtung als, insbesondere stufenlos verstellbares, Mehrwege-Ventil ausgebildet sein, um die Ventileinrichtung bauteilreduziert mit nur einem einzigen Ventil auszubilden. Alternativ kann die Ventilvorrichtung mittels mehrerer, insbesondere zweier und/oder stufenlos verstellbarer, Durchgangsventile ausgebildet sein, um die Ventileinrichtung besonders kostengünstig auszubilden. Bevorzugt sind die Durchgangsventile dabei stufenlos regelbar, um den Kühlmittelstrom durch die Durchgangsventile je nach Betriebssituation des Fahrzeugs wie gewünscht einzustellen.

In einer bevorzugten konkreten Ausführungsform weist der kombinierte Kühlkreislauf wenigstens zwei Verzweigungsbereiche auf, mittels denen der NT-Kühlkreislauf und der HT-Kühlkreislauf strömungstechnisch miteinander verbunden sind, wobei an einem ersten Verzweigungsbereich der Kühlmittelstrom durch den NT-Kühlkreislauf und der Kühlmittelstrom durch den HT-Kühlkreislauf zusammengeführt werden können, und wobei an einem zweiten Verzweigungsbereich der Kühlmittelstrom auf den NT-Kühlkreislauf und auf den HT-Kühlkreislauf verteilt werden kann, und wobei die wenigstens eine Fördereinrichtung stromab des ersten Verzweigungsbereichs und stromauf des zweiten Verzweigungsbereichs in dem kombinierten Kühlkreislauf angeordnet ist. Durch diese Anordnung der wenigstens einen Fördereinrichtung wird auf einfache Weise sichergestellt, dass das Kühlmittel durch beide Kühlkreisläufe gefördert wird.

Vorzugsweise ist dabei stromauf des ersten Verzweigungsbereichs und stromab des zweiten Verzweigungsbereichs die Brennkraftmaschine und wenigstens ein den HT-Kühlkreislauf kühlender Wärmetauscher in dem HT-Kühlkreislauf angeordnet, um eine zuverlässige Kühlung der Brennkraftmaschine sicherzustellen. Besonders bevorzugt ist dabei die Brennkraftmaschine stromauf des wenigstens einen Wärmetauschers in dem HT-Kühlkreislauf angeordnet. Dadurch wird die Effektivität des kombinierten Kühlkreislaufs deutlich erhöht, da das mit der Kühleinrichtung gekühlte Kühlmittel sowohl in den HT-Kühlkreislauf als auch in den NT-Kühlkreislauf eingeleitet wird.

In einer konkreten Ausführungsform kann die ER-Einrichtung derart ausgebildet sein, dass die Energie über einen thermodynamischen Prozess, insbesondere über einen Dampfkreisprozess, gewonnen und/oder erzeugt werden kann, wobei mittels des wärmezuführenden Wärmetauschers der ER-Einrichtung Wärme in den Prozess eingetragen werden kann, und wobei mittels des wärmeabführenden Wärmetauschers der ER-Einrichtung Wärme aus dem Prozess ausgetragen werden kann.

Alternativ und/oder zusätzlich kann die ER-Einrichtung auch als thermoelektrischer Generator ausgebildet sein.

Zur Lösung der bereits erwähnten Aufgabenstellung wird ferner ein Verfahren gemäß Anspruch 15 vorgeschlagen.

Die sich durch die erfindungsgemäße Verfahrensführung ergebenden Vorteile sind identisch mit den bereits gewürdigten Vorteilen des erfindungsgemäßen Kühlsystems, so dass diese hier nicht wiederholt werden.

Zudem wird ein Fahrzeug, insbesondere ein Nutzfahrzeug, mit dem erfindungsgemäßen Kühlsystem und/oder zur Durchführung des erfindungsgemäßen Verfahrens beansprucht.

Die sich daraus ergebenden Vorteile sind ebenfalls identisch mit den bereits gewürdigten Vorteilen des erfindungsgemäßen Kühlsystems, so dass auch diese hier nicht wiederholt werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand Zeichnungen lediglich beispielhaft näher erläutert.

Es zeigen:
- Fig. 1: in einer schematischen Darstellung eine erste Ausführungsform des erfindungsgemäßen Kühlsystems;
- Fig. 2: in einer schematischen Darstellung eine zweite Ausführungsform des erfindungsgemäßen Kühlsystems;
- Fig. 3: in einer schematischen Darstellung eine dritte Ausführungsform des erfindungsgemäßen Kühlsystems;
- Fig. 4: in einer schematischen Darstellung eine vierte Ausführungsform des erfindungsgemäßen Kühlsystems; und
- Fig. 5: in einer schematischen Darstellung eine fünfte Ausführungsform des erfindungsgemäßen Kühlsystems.

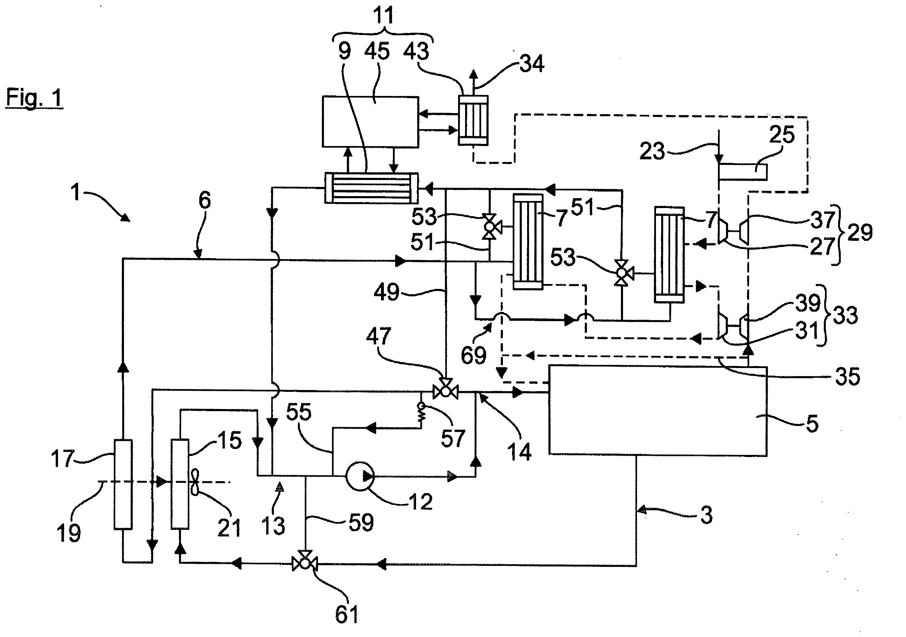

In Fig. 1 ist eine erste Ausführungsform eines Kühlsystems 1 für ein Fahrzeug gezeigt. Das Kühlsystem 1 weist einen Hoch-Temperatur-Kühlkreislauf (HT-Kühlkreislauf) 3 auf, mittels dem eine Brennkraftmaschine 5 des Fahrzeuges gekühlt wird. Zudem weist das Kühlsystem auch einen Niedrig-Temperatur-Kühlkreislauf (NT-Kühlkreislauf) 6 auf, mittels dem wenigstens ein, hier lediglich beispielhaft zwei, Ladeluftkühler 7 des Fahrzeuges und ein wärmeabführender Wärmetauscher 9 einer Energie-Rückgewinnungs-Einrichtung 11 des Fahrzeuges gekühlt werden. Der HT-Kühlkreislauf 3 und der NT-Kühlkreislauf 6 sind an Verzweigungsbereichen 13, 14 strömungstechnisch miteinander verbunden und bilden einen kombinierten Kühlkreislauf aus. Stromab eines ersten Verzweigungsbereichs 13, an dem der Kühlmittelstrom durch den HT-Kühlkreislauf 3 und der Kühlmittelstrom durch den NT-Kühlkreislauf 6 zusammengeführt werden, und stromauf eines zweiten Verzweigungsbereichs 14, an dem sich der Kühlmittelstrom auf den HT-Kühlkreislauf 3 und den NT-Kühlkreislauf 6 verteilt, ist weiter eine Fördereinrichtung 15, beispielsweise eine Pumpe, angeordnet, mittels der der Kühlmittelstrom durch den HT-Kühlkreislauf 3 und den NT-Kühlkreislauf 6 gefördert werden kann.

Wie aus Fig. 1 weiter hervorgeht, weist der HT-Kühlkreislauf 3 einen wärmeabführenden Wärmetauscher 15 auf, mittels dem das Kühlmittel des kombinierten Kühlkreislaufs gekühlt wird. Der Wärmetauscher 15 ist dabei stromab der Brennkraftmaschine 5 in dem HT-Kühlkreislauf 3 angeordnet. Der NT-Kühlkreislauf 6 weist ebenfalls einen wärmeabführenden Wärmetauscher 17 auf. Dieser ist hier beispielhaft stromauf der Ladeluftkühler 7 und stromauf der Wärmesenke 9 in dem NT-Kühlkreislauf 6 angeordnet.

Des Weiteren sind die beiden Wärmetauscher 15 und 17 hier derart an einem, in FahrzeugLängsrichtung gesehen, vorderen Bereich des Fahrzeuges angeordnet, dass sie während der Fahrt mit dem Fahrzeug von einem Luftstrom 19 durchströmt und gekühlt werden. Der Wärmetauscher 17 des NT-Kühlkreislaufs 6 ist dabei, in Luft-Strömungsrichtung gesehen, stromauf des Wärmetauschers 15 des HT-Kühlkreislaufs 3 angeordnet. Zudem ist optional, in Luft-Strömungsrichtung gesehen, stromab des Wärmetauschers 15 ein Lüfter 21 angeordnet, mittels dem die Wärmetauscher 15, 17 bedarfsweise zusätzlich gekühlt werden können.

Wie in Fig. 1 weiter gezeigt ist, ist der wärmeabführende Wärmetauscher 9 der Energie-Rückgewinnungs-Einrichtung 11 stromab der Ladeluftkühler 7 in dem NT-Kühlkreislauf 6 angeordnet. Dadurch wird sichergestellt, dass die Ladeluftkühler 7 bei jeder Betriebssituation des Fahrzeuges maximal gekühlt werden können. Mittels der Ladeluftkühler 7 wird eine in einem Ansaugtrakt des Fahrzeuges der Brennkraftmaschine 5 zugeführte Verbrennungsluft 23 gekühlt. Die Verbrennungsluft 23 strömt in dem Ansaugtrakt zunächst durch einen Luftfilter 25, anschließend durch einen Verdichter 27 eines Abgasturboladers 29 und von dort durch einen, hier als Niederdruck-Ladeluftkühler ausgebildeten Ladeluftkühler 7. Ausgehend von diesem Ladeluftkühler 7 strömt die Verbrennungsluft dann zunächst durch einen Verdichter 31 eines zweiten Abgasturboladers 33, anschließend durch den anderen, hier als Hochdruck-Ladeluftkühler ausgebildeten Ladeluftkühler 7 und von dort in die Brennkraftmaschine 5.

Das Fahrzeug weist, hier lediglich beispielhaft, weiter auch eine Abgasrückführung 35 auf, mittels der ein Teil eines Abgases 34 der Brennkraftmaschine 5 stromab der Ladeluftkühler 7 in den Ansaugtrakt eingeleitet werden kann. Die Abgasrückführung 35 ist dabei stromauf einer Turbine 39 des zweiten Abgasturboladers 33, stromauf einer Turbine 37 des ersten Abgasturboladers 29 sowie stromauf eines wärmezuführenden Wärmetauschers 43 der Energie-Rückgewinnungs-Einrichtung 11 in einem Abgasstrang des Fahrzeuges angeordnet.

Der wärmezuführende Wärmetauscher 43 der Energie-Rückgewinnungs-Einrichtung 11 ist weiter derart in bzw. an dem Abgasstrang des Fahrzeuges angeordnet, dass dieser von dem Abgas 34 der Brennkraftmaschine 5 aufgeheizt wird. Der wärmeabführende Wärmetauscher 9 und der wärmezuführende Wärmetauscher 43 der Energie-Rückgewinnungs-Einrichtung 11 sind wärmeübertragend mit einer in Fig. 1 schematisch dargestellten Maschine bzw. Vorrichtung 45 der Energie-Rückgewinnungs-Einrichtung 11 gekoppelt, mittels der durch die Temperaturdifferenz zwischen den Wärmetauschern 9, 43 elektrische und/oder mechanische Energie erzeugt werden kann. Die Energieerzeugung kann dabei beispielsweise über einen thermodynamischen Dampfkreisprozess erfolgen, bei dem mittels des wärmezuführenden Wärmetauschers 43 Wärme in den Dampfkreisprozess eingetragen und mittels des wärmeabführenden Wärmetauschers 9 Wärme aus den Dampfkreisprozess ausgetragen wird. Alternativ zu dem Dampfkreisprozess kann die Energieerzeugung beispielsweise auch mittels eines thermoelektrischen Generators erfolgen. Unabhängig davon, auf welche Art die Energie hier erzeugt wird, ist jedoch festzuhalten, dass mittels der Energie-Rückgewinnungs-Einrichtung 11 Energie aus dem Abgas 34 bzw. der Abwärme der Brennkraftmaschine 5 gewonnen bzw. erzeugt werden kann.

Wie in Fig. 1 weiter gezeigt ist, weist das Kühlsystem 1 hier eine stromab des zweiten Verzweigungsbereichs 14 und stromauf der Kühleinrichtung 17 in dem NT-Kühlkreislauf 6 angeordnete Ventileinrichtung, hier beispielhaft ein stufenlos verstellbares Mehrwege-Ventil 47, auf, mittels der der Kühlmittelstrom durch den kombinierten Kühlkreislauf teilweise gesteuert bzw. geregelt wird. An das Mehrwege-Ventil 47 ist zudem eine Bypass-Leitung 49 angeschlossen, mittels der der Kühlmittelstrom ausgehend von dem Mehrwege-Ventil 47 stromab der Ladeluftkühler 7 und stromauf des wärmeabführenden Wärmetauschers 9 in den NT-Kühlkreislauf 6 eingeleitet werden kann. Das Mehrwege-Ventil 47 weist hier beispielhaft folgende drei Ventilstellungen auf:
In einer ersten Ventilstellung des Mehrwege-Ventils 47 wird der Kühlmittelstrom durch den NT-Kühlkreislauf 6 und durch die Bypass-Leitung 49 gesperrt. In einer zweiten Ventilstellung des Mehrwege-Ventils 47 wird der Kühlmittelstrom durch den NT-Kühlkreislauf 6 freigegeben und der Kühlmittelstrom durch die Bypass-Leitung 49 gesperrt. In einer dritten Ventilstellung des Mehrwege-Ventils 47 wird der Kühlmittelstrom durch die Bypass-Leitung 49 freigegeben und der Kühlmittelstrom durch den NT-Kühlkreislauf 6 gesperrt. Der Kühlmittelstrom durch den HT-Kühlkreislauf 3 ist dabei stets freigegeben.

Gemäß Fig. 1 ist zudem auch jedem Ladeluftkühler 7 eine Bypass-Leitung 51 zugeordnet, mittels denen der Kühlmittelstrom an dem jeweiligen Ladeluftkühler 7 vorbeigeführt bzw. vorbeigeleitet werden kann. Jedem Ladeluftkühler 7 ist zudem eine Ventileinrichtung, hier beispielhaft ein stufenlos verstellbares Mehrwege-Ventil 53, zugeordnet. In einer ersten Ventilstellung der Mehrwege-Ventile 53 wird dabei der Kühlmittelstrom durch den jeweiligen Ladeluftkühler 7 freigegeben und der Kühlmittelstrom durch die jeweilige Bypass-Leitung gesperrt. In der zweiten Ventilstellung der Mehrwege-Ventile 53 wird der Kühlmittelstrom durch den jeweiligen Ladeluftkühler 7 gesperrt und der Kühlmittelstrom durch die jeweilige Bypass-Leitung 51 freigegeben.

Weiter weist das Kühlsystem 1 auch eine Bypass-Leitung 55 auf, mittels der der Kühlmittelstrom stromauf des Mehrwege-Ventils 47 und stromab der Kühleinrichtung 17 in dem NT-Kühlkreislauf 6 stromauf der Fördereinrichtung 12 und stromab des ersten Verzweigungsbereichs 13 in den HT-Kühlkreislauf 3 eingeleitet werden kann. In der Bypass-Leitung 55 ist ein Überdruck-Ventil 57 angeordnet, so dass das Kühlmittel nur bei ausreichend großem Druck in den HT-Kühlkreislauf 3 eingeleitet wird.

In dem HT-Kühlkreislauf 3 ist zudem auch eine Bypass-Leitung 59 angeordnet, mittels der der Kühlmittelstrom stromab der Brennkraftmaschine 5 und stromauf der Kühleinrichtung 15 in dem HT-Kühlkreislauf 3 in einen Bereich stromab des ersten Verzweigungsbereichs 13 und stromab der Bypass-Leitung 59 des Kühlsystems 1 umgeleitet werden kann. Diese Umleitung wird über ein Mehrwege-Ventil 61 gesteuert bzw. geregelt.

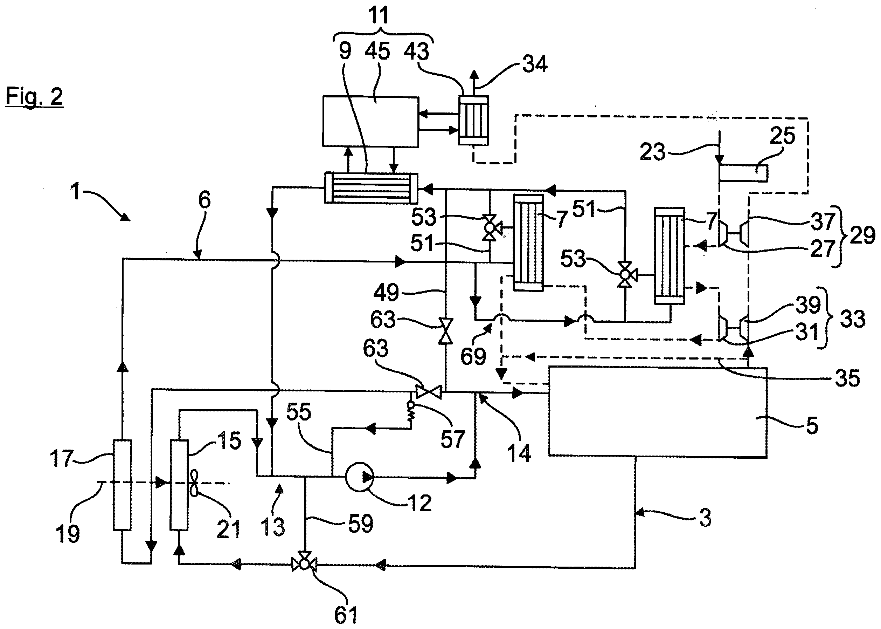

In Fig. 2 ist eine zweite Ausführungsform des Kühlsystems 1 gezeigt. Das Kühlsystem 1 weist hier anstelle des Mehrwege-Ventils 47 zwei einfache Durchgangsventile 63 auf, mittels denen der der Kühlmittelstrom gesperrt und freigegeben werden kann. Eines der Durchgangsventile 63 ist dabei in der Bypass-Leitung 49 angeordnet, während das andere Durchgangsventil 63 stromab der Bypass-Leitung 49 und stromauf der Bypass-Leitung 55 in dem NT-Kühlkreislauf 6 angeordnet ist. Die beiden Durchgangsventile 63 werden hier derart geschaltet, dass der Kühlmittelstrom durch den kombinierten Kühlkreislauf auf identische Weise wie mit dem in Fig. 1 gezeigten Mehrwege-Ventil 47 gesteuert bzw. geregelt wird.

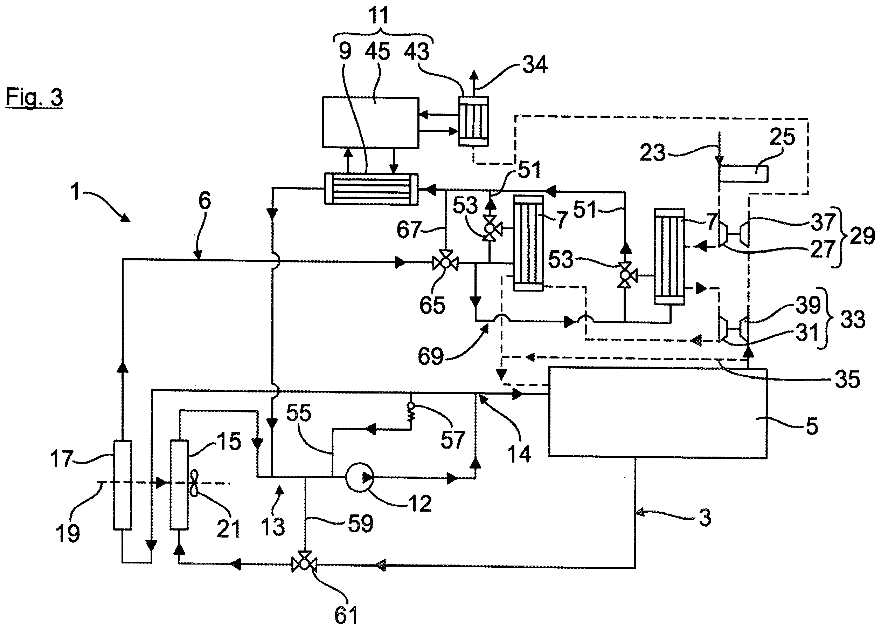

In Fig. 3 ist eine zweite Ausführungsform des Kühlsystems 1 gezeigt. Das Kühlsystem 1 weist hier, im Vergleich zu der ersten Ausführung gemäß Fig. 1, keine Bypass-Leitung 49 und kein Mehrwege-Ventil 47 auf. Anstelle dessen weist das Kühlsystem 1 hier eine stromab der Kühleinrichtung 17 und stromauf der Ladeluftkühler 7 in dem NT-Kühlkreislauf 6 angeordnete Ventileinrichtung, hier beispielhaft ein stufenlos verstellbares Mehrwege-Ventil 65, auf, mittels dem der Kühlmittelstrom durch den kombinierten Kühlkreislauf teilweise gesteuert bzw. geregelt wird. An das Mehrwege-Ventil 65 ist eine Bypass-Leitung 67 angeschlossen, mittels der der Kühlmittelstrom ausgehend von dem Mehrwege-Ventil 65 stromab der Ladeluftkühler 7 und stromauf der Wärmesenke 9 in den NT-Kühlkreislauf 6 eingeleitet werden kann. Das Mehrwege-Ventil 65 weist hier beispielhaft folgende drei Ventilstellungen auf:
In einer ersten Ventilstellung des Mehrwege-Ventils 65 wird der Kühlmittelstrom durch den NT-Kühlkreislauf 6 gesperrt. In einer zweiten Ventilstellung des Mehrwege-Ventils 65 wird der Kühlmittelstrom durch den NT-Kühlkreislauf 6 freigegeben und Kühlmittelstrom durch die Bypass-Leitung 67 gesperrt. Der Kühlmittelstrom durch einen die Ladeluftkühler 7 aufweisenden Ladeluftkühlerbereich 69 des NT-Kühlkreislaufs 6 ist somit freigegeben. In einer dritten Ventilstellung des Mehrwege-Ventils 65 wird der Kühlmittelstrom durch die Bypass-Leitung 67 und durch den NT-Kühlkreislauf 6 freigegeben. Der Kühlmittelstrom durch den HT-Kühlkreislauf 3 ist dabei stets freigegeben. Zudem kann in der dritten Ventilstellung des Mehrwege-Ventils 65 der Kühlmittelstrom durch den Ladeluftkühlerbereich 69 des NT-Kühlkreislaufs 6 ebenfalls freigegeben werden. Alternativ kann in der dritten Ventilstellung des Mehrwege-Ventils 65 der Kühlmittelstrom durch den Ladeluftkühlerbereich 69 auch gesperrt sein.

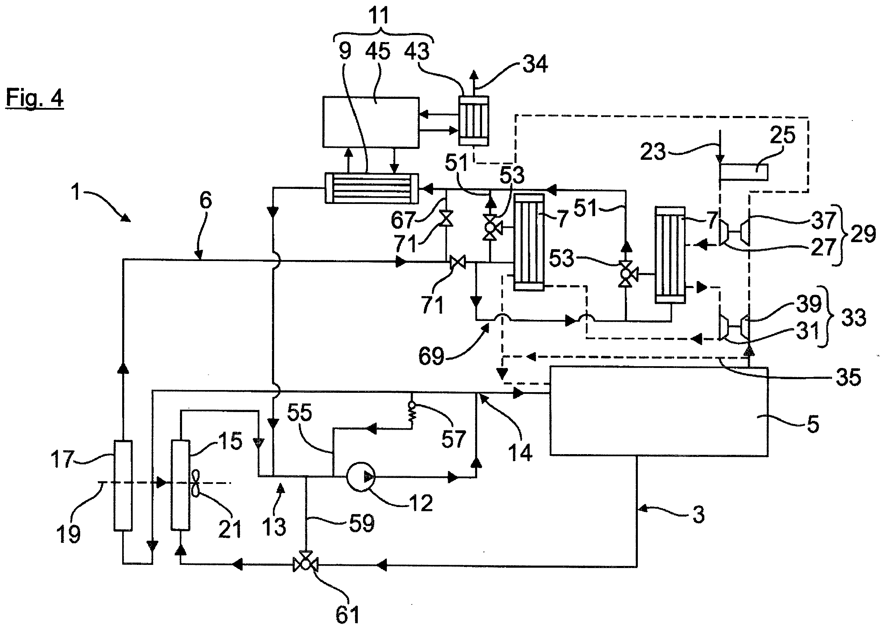

In Fig. 4 ist eine vierte Ausführungsform des Kühlsystems 1 gezeigt. Das Kühlsystem 1 weist hier, im Vergleich zu der Ausführung gemäß Fig. 3, anstelle des Mehrwege-Ventils 65 zwei einfache Durchgangsventile 71 auf, mittels denen der Kühlmittelstrom gesperrt und freigegeben werden kann. Eines der Durchgangsventile 71 ist dabei in der Bypass-Leitung 67 angeordnet, während das andere Durchgangsventil 71 stromab der Bypass-Leitung 67 und stromauf des Ladeluftkühlerbereichs 69 in dem NT-Kühlkreislauf 6 angeordnet ist. Die beiden Durchgangsventile 71 werden hier derart geschaltet, dass der Kühlmittelstrom durch den kombinierten Kühlkreislauf auf identische Weise wie mit dem in Fig. 3 gezeigten Mehrwege-Ventil 65 gesteuert bzw. geregelt wird.

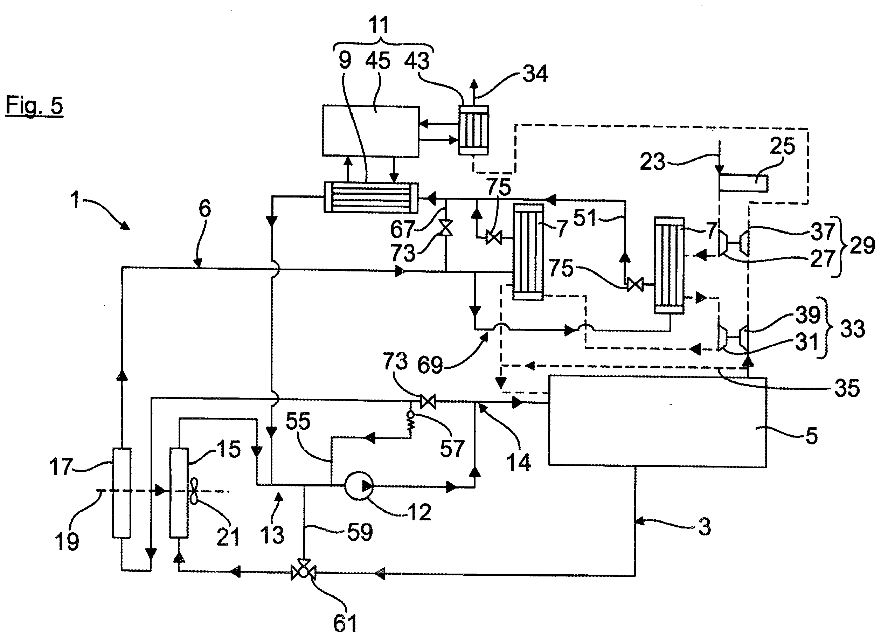

In Fig. 5 ist eine fünfte Ausführungsform des Kühlsystems 1 gezeigt. Das Kühlsystem 1 weist hier, im Vergleich zu der Ausführung gemäß Fig. 3, anstelle des Mehrwege-Ventils 65 zwei einfache Durchgangsventile 73 auf, mittels denen der der Kühlmittelstrom gesperrt und freigegeben werden kann. Eines der Durchgangsventile 73 ist dabei in der Bypass-Leitung 67 angeordnet, während das andere Durchgangsventil 73 stromab des zweiten Verzweigungsbereichs 14 und stromauf der Bypass-Leitung 55 in dem NT-Kühlkreislauf 6 angeordnet ist. Die beiden Durchgangsventile 73 werden hier derart geschaltet, dass der Kühlmittelstrom durch den kombinierten Kühlkreislauf auf identische Weise wie mit dem in Fig. 3 gezeigten Mehrwege-Ventil 65 gesteuert bzw. geregelt wird, wobei hier in der dritten Ventilstellung der Durchgangsventile 73 der Kühlmittelstrom durch den Ladeluftkühlerbereich 69 des NT-Kühlkreislaufs 3 freigegeben ist.

Zudem weist das Kühlsystem 1 in der fünften Ausführungsform, im Vergleich zu den in den Fig. 1 bis 4 gezeigten Ausführungen, auch keine Bypass-Leitungen 51 und Mehrwege-Ventile 53 auf. Anstelle dessen ist hier jedem der Ladeluftkühler 7 eine Ventileinrichtung, hier beispielhaft ein Thermostat 75, zugeordnet, mittels denen der Kühlmittelstrom durch den jeweiligen Ladeluftkühler 7 temperaturabhängig freigegeben und gesperrt wird.

### Bezugszeichenliste

- 1: Kühlsystem
- 3: HT-Kühlkreislauf
- 5: Brennkraftmaschine
- 6: NT-Kühlkreislauf
- 7: Ladeluftkühler
- 9: Wärmesenke
- 11: Energie-Rückgewinnungs-Einrichtung
- 12: Fördereinrichtung
- 13: erster Verzweigungsbereich
- 14: zweiter Verzweigungsbereich
- 15: Wärmetauscher
- 17: Wärmetauscher
- 19: Luftstrom
- 21: Ventilator
- 23: Verbrennungsluft
- 25: Luftfilter
- 27: Verdichter
- 29: Abgasturbolader
- 31: Verdichter
- 33: Abgasturbolader
- 34: Abgas
- 35: Abgasrückführung
- 37: Turbine
- 39: Turbine
- 43: Wärmequelle
- 45: Vorrichtung
- 47: Mehrwege-Ventil
- 49: Bypass-Leitung
- 51: Bypass-Leitung
- 53: Mehrwege-Ventile
- 55: Bypass-Leitung
- 57: Überdruck-Ventil
- 59: Bypass-Leitung
- 61: Mehrwege-Ventil
- 63: Durchgangsventil
- 65: Mehr-Wege-Ventil
- 67: Bypass-Leitung
- 69: Ladeluftkühlerbereich
- 71: Durchgangsventil
- 73: Durchgangsventil
- 75: Thermostat

## Patentansprüche

1. Kühlsystem für ein Fahrzeug, mit einem Hoch-Temperatur-Kühlkreislauf (HT-Kühlkreislauf, 3), mittels dem eine Brennkraftmaschine (5) des Fahrzeugs kühlbar ist, wobei wenigstens ein Ladeluftkühler (7) vorgesehen ist, mittels dem die der Brennkraftmaschine (5) zuführbare Verbrennungsluft (23) kühlbar ist, wobei eine Energie-Rückgewinnungs-Einrichtung (ER-Einrichtung, 11) vorgesehen ist, mittels der aus einer Abwärme der Brennkraftmaschine (5) Energie gewinnbar und/oder erzeugbar ist, wobei die ER-Einrichtung (11) einen wärmezuführenden Wärmetauscher (43) aufweist, mittels dem die Abwärme der Brennkraftmaschine (5) der ER-Einrichtung (11) zuführbar ist, wobei die ER-Einrichtung (11) einen wärmeabführenden Wärmetauscher (9) aufweist, wobei ein, eine niedrigere Temperatur als der HT-Kühlkreislauf (3) aufweisender Niedrig-Temperatur-Kühlkreislauf (NT-Kühlkreislauf, 6) vorgesehen ist, mittels dem sowohl der wenigstens eine Ladeluftkühler (7) als auch der wärmeabführende Wärmetauscher (9) der ER-Einrichtung (11) kühlbar sind, wobei der HT-Kühlkreislauf (3) und der NT-Kühlkreislauf (6) strömungstechnisch miteinander verbunden sind und einen kombinierten Kühlkreislauf ausbilden, und wobei wenigstens eine Fördereinrichtung (12) vorgesehen ist, mittels der ein Kühlmittel des kombinierten Kühlkreislaufs durch den kombinierten Kühlkreislauf förderbar ist, **dadurch gekennzeichnet,**
**dass** eine Ventileinrichtung (47; 63; 65; 71; 73) vorgesehen ist, mittels der der Kühlmittelstrom durch den kombinierten Kühlkreislauf steuerbar und/oder regelbar ist, wobei in einer ersten Ventilstellung der Ventileinrichtung (47; 63; 65; 71; 73) der Kühlmittelstrom durch den HT-Kühlkreislauf (3) freigegeben und der Kühlmittelstrom durch den NT-Kühlkreislauf (6) gesperrt ist, und wobei in einer zweiten Ventilstellung der Ventileinrichtung (47; 63; 65; 71; 73) der Kühlmittelstrom durch den HT-Kühlkreislauf (3) und der Kühlmittelstrom durch den NT-Kühlkreislauf (6) freigegeben sind, und
**dass** eine Bypass-Einrichtung (49) vorgesehen ist, mittels der der wärmeabführende Wärmetauscher (9) der ER-Einrichtung (11) derart strömungstechnisch mit dem HT-Kühlkreislauf (3) verbindbar ist, dass der wärmeabführende Wärmetauscher (9) der ER-Einrichtung (11) mittels des HT-Kühlkreislaufs (3) kühlbar ist, wobei in der ersten und zweiten Ventilstellung der Ventileinrichtung (47; 63) der Kühlmittelstrom durch die Bypass-Einrichtung (49) gesperrt ist, und wobei in einer dritten Ventilstellung der Ventileinrichtung (47, 63) der Kühlmittelstrom durch den HT-Kühlkreislauf (3) und durch die Bypass-Einrichtung (49) freigegeben ist und der Kühlmittelstrom durch den NT-Kühlkreislauf (6) gesperrt ist.

2. Kühlsystem nach Anspruch 1, **dadurch gekennzeichnet, dass** in einer vierten Ventilstellung der Ventileinrichtung (47, 63) der Kühlmittelstrom durch den HT-Kühlkreislauf (3), durch die Bypass-Einrichtung (49) und durch den NT-Kühlkreislauf (6) freigegeben ist.

3. Kühlsystem nach Anspruch 1 oder 2, **dadurch gekennzeichnet, dass** jedem Ladeluftkühler (7) jeweils eine weitere Bypass-Einrichtung (51) zugeordnet ist, mittels der der Kühlmittelstrom an dem Ladeluftkühler (7) vorbeiführbar und/oder vorbeileitbar ist, und dass jedem Ladeluftkühler (7) eine Ladeluftkühler-Ventileinrichtung (53) zugeordnet ist, die in einer ersten Ventilstellung den Kühlmittelstrom durch den Ladeluftkühler (7) freigibt und den Kühlmittelstrom durch die weitere Bypass-Einrichtung (51) sperrt und in einer zweiten Ventilstellung den Kühlmittelstrom durch den Ladeluftkühler (7) sperrt und den Kühlmittelstrom durch die weitere Bypass-Einrichtung (53) freigibt, wobei bevorzugt vorgesehen ist, dass die Ladeluftkühler-Ventileinrichtung (53) als, insbesondere stufenlos verstellbares, Mehrwege-Ventil ausgebildet ist.

4. Kühlsystem für ein Fahrzeug, mit einem Hoch-Temperatur-Kühlkreislauf (HT-Kühlkreislauf, 3), mittels dem eine Brennkraftmaschine (5) des Fahrzeugs kühlbar ist, wobei wenigstens ein Ladeluftkühler (7) vorgesehen ist, mittels dem die der Brennkraftmaschine (5) zuführbare Verbrennungsluft (23) kühlbar ist, wobei eine Energie-Rückgewinnungs-Einrichtung (ER-Einrichtung, 11) vorgesehen ist, mittels der aus einer Abwärme der Brennkraftmaschine (5) Energie gewinnbar und/oder erzeugbar ist, wobei die ER-Einrichtung (11) einen wärmezuführenden Wärmetauscher (43) aufweist, mittels dem die Abwärme der Brennkraftmaschine (5) der ER-Einrichtung (11) zuführbar ist, wobei die ER-Einrichtung (11) einen wärmeabführenden Wärmetauscher (9) aufweist, wobei ein, eine niedrigere Temperatur als der HT-Kühlkreislauf (3) aufweisender Niedrig-Temperatur-Kühlkreislauf (NT-Kühlkreislauf, 6) vorgesehen ist, mittels dem sowohl der wenigstens eine Ladeluftkühler (7) als auch der wärmeabführende Wärmetauscher (9) der ER-Einrichtung (11) kühlbar sind, wobei der HT-Kühlkreislauf (3) und der NT-Kühlkreislauf (6) strömungstechnisch miteinander verbunden sind und einen kombinierten Kühlkreislauf ausbilden, und wobei wenigstens eine Fördereinrichtung (12) vorgesehen ist, mittels der ein Kühlmittel des kombinierten Kühlkreislaufs durch den kombinierten Kühlkreislauf förderbar ist, **dadurch gekennzeichnet,**
**dass** eine Ventileinrichtung (47; 63; 65; 71; 73) vorgesehen ist, mittels der der Kühlmittelstrom durch den kombinierten Kühlkreislauf steuerbar und/oder regelbar ist, wobei in einer ersten Ventilstellung der Ventileinrichtung (47; 63; 65; 71; 73) der Kühlmittelstrom durch den HT-Kühlkreislauf (3) freigegeben und der Kühlmittelstrom durch den NT-Kühlkreislauf (6) gesperrt ist, und wobei in einer zweiten Ventilstellung der Ventileinrichtung (47; 63; 65; 71; 73) der Kühlmittelstrom durch den HT-Kühlkreislauf (3) und der Kühlmittelstrom durch den NT-Kühlkreislauf (6) freigegeben sind, und
**dass** eine Bypass-Einrichtung (67) vorgesehen ist, mittels der der Kühlmittelstrom in dem NT-Kühlkreislauf (6) an einem den wenigstens einen Ladeluftkühler (7) aufweisenden Ladeluftkühler-Bereich (69) des NT-Kühlkreislaufs (6) vorbeiführbar und/oder vorbeileitbar ist, wobei der Kühlmittelstrom durch die weitere Bypass-Einrichtung (67) in der ersten und zweiten Ventilstellung der Ventileinrichtung (65; 71; 73) gesperrt ist, und wobei in einer dritten Ventilstellung der Ventileinrichtung (65; 71; 73) der Kühlmittelstrom durch den HT-Kühlkreislauf (3), durch den NT-Kühlkreislauf (6) und durch die Bypass-Einrichtung (67) freigegeben ist.

5. Kühlsystem nach einem der vorhergehenden Ansprüche, **dadurch gekennzeichnet, dass** der wärmeabführende Wärmetauscher (9) der ER-Einrichtung (11) stromab des wenigstens einen Ladeluftkühlers (7) in dem NT-Kühlkreislauf (6) angeordnet ist, und dass stromauf des wenigstens einen Ladeluftkühlers (7) wenigstens ein den NT-Kühlkreislauf (6) kühlender Wärmetauscher (17) in dem NT-Kühlkreislauf (6) angeordnet ist.

6. Kühlsystem nach einem der vorhergehenden Ansprüche, **dadurch gekennzeichnet, dass** das Kühlmittel mittels einer einzigen Fördereinrichtung (12) durch den kombinierten Kühlkreislauf förderbar ist.

7. Kühlsystem nach einem der Ansprüche 4 bis 6, **dadurch gekennzeichnet, dass** in der dritten Ventilstellung der Kühlmittelstrom durch den Ladeluftkühler-Bereich (69) freigegeben ist, oder dass in der dritten Ventilstellung der Kühlmittelstrom durch den Ladeluftkühler-Bereich (69) gesperrt ist.

8. Kühlsystem nach einem der Ansprüche 4 bis 7, **dadurch gekennzeichnet, dass**, sofern mehrere Ladeluftkühler (7) vorgesehen sind, jedem Ladeluftkühler (7) jeweils eine weitere Bypass-Einrichtung (51) zugeordnet ist, mittels der der Kühlmittelstrom an dem Ladeluftkühler (7) vorbeiführbar und/oder vorbeileitbar ist, und dass jedem Ladeluftkühler (7) eine Ladeluftkühler-Ventileinrichtung (53) zugeordnet ist, die in einer ersten Ventilstellung den Kühlmittelstrom durch den Ladeluftkühler (7) freigibt und den Kühlmittelstrom durch die weitere Bypass-Einrichtung (51) sperrt und in einer zweiten Ventilstellung den Kühlmittelstrom durch den Ladeluftkühler (7) sperrt und den Kühlmittelstrom durch die weitere Bypass-Einrichtung (51) freigibt, wobei bevorzugt vorgesehen ist, dass die Ladeluftkühler-Ventileinrichtung (53) als, insbesondere stufenlos verstellbares, Mehrwege-Ventil ausgebildet ist.

9. Kühlsystem nach einem der Ansprüche 4 bis 7, **dadurch gekennzeichnet, dass** jedem Ladeluftkühler (7) jeweils eine Ladeluftkühler-Ventileinrichtung (75) zugeordnet ist, mittels dem der Kühlmittelstrom durch den Ladeluftkühler (7) freigebbar und sperrbar ist, wobei bevorzugt vorgesehen ist, dass die Ladeluftkühler-Ventileinrichtung (75) als, insbesondere stufenlos verstellbares, Durchgangsventil, insbesondere als Thermostat, ausgebildet ist.

10. Kühlsystem nach einem der vorhergehenden Ansprüche, **dadurch gekennzeichnet, dass** die Ventileinrichtung (47; 63; 65; 71; 73) als, insbesondere stufenlos verstellbares, Mehrwege-Ventil ausgebildet ist, oder dass die Ventileinrichtung (47; 63; 65; 71; 73) mittels mehrerer, insbesondere zweier und/oder stufenlos verstellbarer" Durchgangsventile ausgebildet ist.

11. Kühlsystem nach einem der vorhergehenden Ansprüche, **dadurch gekennzeichnet, dass** der kombinierte Kühlkreislauf wenigstens zwei Verzweigungsbereiche (13, 14) aufweist, mittels denen der NT-Kühlkreislauf (6) und der HT-Kühlkreislauf (3) strömungstechnisch miteinander verbunden sind, wobei an einem ersten Verzweigungsbereich (13) der Kühlmittelstrom durch den NT-Kühlkreislauf (6) und der Kühlmittelstrom durch den HT-Kühlkreislauf (3) zusammenführbar sind, wobei an einem zweiten Verzweigungsbereich (14) der Kühlmittelstrom auf den NT-Kühlkreislauf (6) und auf den HT-Kühlkreislauf (3) verteilbar ist, und wobei die wenigstens eine Fördereinrichtung (12) stromab des ersten Verzweigungsbereichs (13) und stromauf des zweiten Verzweigungsbereichs (14) in dem kombinierten Kühlkreislauf angeordnet ist.

12. Kühlsystem nach Anspruch 11, **dadurch gekennzeichnet, dass** stromauf des ersten Verzweigungsbereichs (13) und stromab des zweiten Verzweigungsbereichs (14) die Brennkraftmaschine (5) und wenigstens ein den HT-Kühlkreislauf (3) kühlender Wärmetauscher (15) in dem HT-Kühlkreislauf (3) angeordnet sind, wobei bevorzugt vorgesehen ist, dass die Brennkraftmaschine (5) stromauf des wenigstens einen Wärmetauschers (15) in dem HT-Kühlkreislauf (3) angeordnet ist.

13. Kühlsystem nach einem der vorhergehenden Ansprüche, **dadurch gekennzeichnet, dass** die ER-Einrichtung (11) derart ausgebildet ist, dass die Energie über einen thermodynamischen Prozess, insbesondere über einen Dampfkreisprozess, gewinnbar und/oder erzeugbar ist, wobei mittels des wärmezuführenden Wärmetauschers (43) der ER-Einrichtung (11) Wärme in den Prozess eintragbar ist, und wobei mittels des wärmeabführenden Wärmetauschers (9) der ER-Einrichtung (11) Wärme aus dem Prozess austragbar ist.

14. Kühlsystem nach einem der vorhergehenden Ansprüche, **dadurch gekennzeichnet, dass** die ER-Einrichtung (11) als thermoelektrischer Generator ausgebildet ist.

15. Verfahren zum Betreiben eines Kühlsystems für ein Fahrzeug, mit einem Hoch-Temperatur-Kühlkreislauf (HT-Kühlkreislauf, 3), mittels dem eine Brennkraftmaschine (5) des Fahrzeugs gekühlt wird, wobei wenigstens ein Ladeluftkühler (7) vorgesehen ist, mittels dem die der Brennkraftmaschine (5) zuführbare Verbrennungsluft (23) gekühlt wird, wobei eine Energie-Rückgewinnungs-Einrichtung (ER-Einrichtung, 11) vorgesehen ist, mittels der aus einer Abwärme der Brennkraftmaschine (5) Energie gewonnen und/oder erzeugt wird, wobei die ER-Einrichtung (11) einen wärmezuführenden Wärmetauscher (43) aufweist, mittels dem die Abwärme der Brennkraftmaschine (5) der ER-Einrichtung (11) zuführbar ist, und wobei die ER-Einrichtung (11) einen wärmeabführenden Wärmetauscher (9) aufweist, wobei ein, eine niedrigere Temperatur als der HT-Kühlkreislauf (3) aufweisender Niedrig-Temperatur-Kühlkreislauf (NT-Kühlkreislauf, 6) vorgesehen ist, mittels dem sowohl der wenigstens eine Ladeluftkühler (7) als auch der wärmeabführende Wärmetauscher (9) der ER-Einrichtung (11) gekühlt werden, wobei der HT-Kühlkreislauf (3) und der NT-Kühlkreislauf (6) strömungstechnisch miteinander verbunden sind und einen kombinierten Kühlkreislauf ausbilden, und wobei wenigstens eine Fördereinrichtung (12) vorgesehen ist, mittels der ein Kühlmittel des kombinierten Kühlkreislaufs durch den kombinierten Kühlkreislauf förderbar ist, **dadurch gekennzeichnet,**
a) **dass** eine Ventileinrichtung (47; 63; 65; 71; 73) vorgesehen ist, mittels der der Kühlmittelstrom durch den kombinierten Kühlkreislauf steuerbar und/oder regelbar ist, wobei in einer ersten Ventilstellung der Ventileinrichtung (47; 63; 65; 71; 73) der Kühlmittelstrom durch den HT-Kühlkreislauf (3) freigegeben und der Kühlmittelstrom durch den NT-Kühlkreislauf (6) gesperrt ist, und wobei in einer zweiten Ventilstellung der Ventileinrichtung (47; 63; 65; 71; 73) der Kühlmittelstrom durch den HT-Kühlkreislauf (3) und der Kühlmittelstrom durch den NT-Kühlkreislauf (6) freigegeben sind, und
b) **dass** eine Bypass-Einrichtung (67) vorgesehen ist, mittels der der Kühlmittelstrom in dem NT-Kühlkreislauf (6) an einem den wenigstens einen Ladeluftkühler (7) aufweisenden Ladeluftkühler-Bereich (69) des NT-Kühlkreislaufs (6) vorbeiführbar und/oder vorbeileitbar ist, wobei der Kühlmittelstrom durch die weitere Bypass-Einrichtung (67) in der ersten und zweiten Ventilstellung der Ventileinrichtung (65; 71; 73) gesperrt ist, und wobei in einer dritten Ventilstellung der Ventileinrichtung (65; 71; 73) der Kühlmittelstrom durch den HT-Kühlkreislauf (3), durch den NT-Kühlkreislauf (6) und durch die Bypass-Einrichtung (67) freigegeben ist,
oder
**dass** eine Bypass-Einrichtung (67) vorgesehen ist, mittels der der Kühlmittelstrom in dem NT-Kühlkreislauf (6) an einem den wenigstens einen Ladeluftkühler (7) aufweisenden Ladeluftkühler-Bereich (69) des NT-Kühlkreislaufs (6) vorbeiführbar und/oder vorbeileitbar ist, wobei der Kühlmittelstrom durch die weitere Bypass-Einrichtung (67) in der ersten und zweiten Ventilstellung der Ventileinrichtung (65; 71; 73) gesperrt ist, und wobei in einer dritten Ventilstellung der Ventileinrichtung (65; 71; 73) der Kühlmittelstrom durch den HT-Kühlkreislauf (3), durch den NT-Kühlkreislauf (6) und durch die Bypass-Einrichtung (67) freigegeben ist.

16. Fahrzeug, insbesondere Nutzfahrzeug, mit einem Kühlsystem nach einem der Ansprüche 1 bis 14 und/oder zur Durchführung eines Verfahrens nach Anspruch 15.

## Claims

1. Cooling system for a vehicle, with a high temperature cooling circuit (HT cooling circuit, 3), by means of which an internal combustion engine (5) of the vehicle can be cooled, at least one intercooler (7) being provided, by means of which combustion air (23) which can be fed to the internal combustion engine (5) can be cooled, an energy recuperation device (ER device, 11) being provided, by means of which energy can be gained and/or generated from waste heat of the internal combustion engine (5), the ER device (11) having a heat-supplying heat exchanger (43), by means of which the waste heat of the internal combustion engine (5) can be fed to the ER device (11), the ER device (11) having a heat-discharging heat exchanger (9), a low temperature cooling circuit (NT cooling circuit, 6) being provided which has a lower temperature than the HT cooling circuit (3) and by means of which both the at least one intercooler (7) and the heat-discharging heat exchanger (9) of the ER device (11) can be cooled, the HT cooling circuit (3) and the NT cooling circuit (6) being connected to one another in terms of flow and configuring a combined cooling circuit, and at least one conveying device (12) being provided, by means of which a coolant of the combined cooling circuit can be conveyed through the combined cooling circuit, **characterized in that** a valve device (47; 63; 65; 71; 73) is provided, by means of which the coolant flow through the combined cooling circuit can be controlled and/or regulated, the coolant flow through the HT cooling circuit (3) being released and the coolant flow through the NT cooling circuit (6) being shut off in a first valve position of the valve device (47; 63; 65; 71; 73), and the coolant flow through the HT cooling circuit (3) and the coolant flow through the NT cooling circuit (6) being released in a second valve position of the valve device (47; 63; 65; 71; 73), and **in that** a bypass device (49) is provided, by means of which the heat-discharging heat exchanger (9) of the ER device (11) can be connected to the HT cooling circuit (3) in terms of flow in such a way that the heat-discharging heat exchanger (9) of the ER device (11) can be cooled by means of the HT cooling circuit (3), the coolant flow through the bypass device (49) being shut off in the first and second valve position of the valve device (47; 63), and the coolant flow through the HT cooling circuit (3) and through the bypass device (49) being released and the coolant flow through the NT cooling circuit (6) being shut off in a third valve position of the valve device (47, 63).

2. Cooling system according to Claim 1, **characterized in that** the coolant flow through the HT cooling circuit (3), through the bypass device (49) and through the NT cooling circuit (6) is released in a fourth valve position of the valve device (47, 63).

3. Cooling system according to Claim 1 or 2, **characterized in that** each intercooler (7) is assigned in each case one further bypass device (51), by means of which the coolant flow can be guided and/or conducted past the intercooler (7), and **in that** each intercooler (7) is assigned an intercooler valve device (53) which releases the coolant flow through the intercooler (7) and shuts off the coolant flow through the further bypass device (51) in a first valve position, and shuts off the coolant flow through the intercooler (7) and releases the coolant flow through the further bypass device (53) in a second valve position, it preferably being provided that the intercooler valve device (53) is configured as a multiway valve which can be adjusted, in particular, in an infinitely variable manner.

4. Cooling system for a vehicle, with a high temperature cooling circuit (HT cooling circuit, 3), by means of which an internal combustion engine (5) of the vehicle can be cooled, at least one intercooler (7) being provided, by means of which the combustion air (23) which can be fed to the internal combustion engine (5) can be cooled, an energy recuperation device (ER device, 11) being provided, by means of which energy can be gained and/or generated from waste heat of the internal combustion engine (5), the ER device (11) having a heat-supplying heat exchanger (43), by means of which the waste heat of the internal combustion engine (5) can be fed to the ER device (11), the ER device (11) having a heat-discharging heat exchanger (9), a low temperature cooling circuit (NT cooling circuit, 6) being provided which has a lower temperature than the HT cooling circuit (3) and by means of which both the at least one intercooler (7) and the heat-discharging heat exchanger (9) of the ER device (11) can be cooled, the HT cooling circuit (3) and the NT cooling circuit (6) being connected to one another in terms of flow and configuring a combined cooling circuit, and at least one conveying device (12) being provided, by means of which a coolant of the combined cooling circuit can be conveyed through the combined cooling circuit, **characterized in that** a valve device (47; 63; 65; 71; 73) is provided, by means of which the coolant flow through the combined cooling circuit can be controlled and/or regulated, the coolant flow through the HT cooling circuit (3) being released and the coolant flow through the NT cooling circuit (6) being shut off in a first valve position of the valve device (47; 63; 65; 71; 73), and the coolant flow through the HT cooling circuit (3) and the coolant flow through the NT cooling circuit (6) being released in a second valve position of the valve device (47; 63; 65; 71; 73), and **in that** a bypass device (67) is provided, by means of which the coolant flow in the NT cooling circuit (6) can be guided and/or conducted past an intercooler region (69) of the NT cooling circuit (6), which intercooler region (69) has the at least one intercooler (7), the coolant flows through the further bypass device (67) being shut off in the first and second valve position of the valve device (65; 71; 73), and the coolant flow through the HT cooling circuit (3), through the NT cooling circuit (6) and through the bypass device (67) being released in a third valve position of the valve device (65; 71; 73).

5. Cooling system according to one of the preceding claims, **characterized in that** the heat-discharging heat exchanger (9) of the ER device (11) is arranged downstream of the at least one intercooler (7) in the NT cooling circuit (6), and **in that** at least one heat exchanger (17) which cools the NT cooling circuit (6) is arranged upstream of the at least one intercooler (7) in the NT cooling circuit (6).

6. Cooling system according to one of the preceding claims, **characterized in that** the coolant can be conveyed through the combined cooling circuit by means of a single conveying device (12).

7. Cooling system according to one of Claims 4 to 6, **characterized in that** the coolant flow through the intercooler region (69) is released in the third valve position, or **in that** the coolant flow through the intercooler region (69) is shut off in the third valve position.

8. Cooling system according to one of Claims 4 to 7, **characterized in that**, if a plurality of intercoolers (7) are provided, each intercooler (7) is assigned in each case one further bypass device (51), by means of which the coolant flow can be guided and/or conducted past the intercooler (7), and **in that** each intercooler (7) is assigned an intercooler valve device (53) which releases the coolant flow through the intercooler (7) and shuts off the coolant flow through the further bypass device (51) in a first valve position, and shuts off the coolant flow through the intercooler (7) and releases the coolant flows through the further bypass device (51) in a second valve position, it preferably being provided that the intercooler valve device (53) is configured as a multiway valve which, in particular, can be adjusted in an infinitely variable manner.

9. Cooling system according to one of Claims 4 to 7, **characterized in that** each intercooler (7) is assigned in each case one intercooler valve device (75), by means of which the coolant flow through the intercooler (7) can be released and shut off, it preferably being provided that the intercooler valve device (75) is configured as a straight-way valve, in particular as a thermostat, which can be adjusted, in particular, in an infinitely variable manner.

10. Cooling system according to one of the preceding claims, **characterized in that** the valve device (47; 63; 65; 71; 73) is configured as a multiway valve which, in particular, can be adjusted in an infinitely variable manner, or **in that** the valve device (47; 63; 65; 71; 73) is configured by means of a plurality of straight-way valves (in particular two valves and/or valves which can be adjusted in an infinitely variable manner).

11. Cooling system according to one of the preceding claims, **characterized in that** the combined cooling circuit has at least two branch regions (13, 14), by means of which the NT cooling circuit (6) and the HT cooling circuit (3) are connected to one another in terms of flow, it being possible for the coolant flow through the NT cooling circuit (6) and the coolant flow through the HT cooling circuit (3) to be combined at a first branch region (13), it being possible for the coolant flow to be distributed to the NT cooling circuit (6) and to the HT cooling circuit (3) at a second branch region (14), and the at least one conveying device (12) being arranged in the combined cooling circuit downstream of the first branch region (13) and upstream of the second branch region (14).

12. Cooling system according to Claim 11, **characterized in that** the internal combustion engine (5) and at least one heat exchanger (15) which cools the HT cooling circuit (3) are arranged in the HT cooling circuit (3) upstream of the first branch region (13) and downstream of the second branch region (14), it preferably being provided that the internal combustion engine (5) is arranged in the HT cooling circuit (3) upstream of the at least one heat exchanger (15).

13. Cooling system according to one of the preceding claims, **characterized in that** the ER device (11) is configured in such a way that the energy can be gained and/or generated via a thermodynamic process, in particular via a steam cycle process, it being possible for heat to be input into the process by means of the heat-supplying heat exchanger (43) of the ER device (11), and it being possible for heat to be removed from the process by means of the heat-discharging heat exchanger (9) of the ER device (11).

14. Cooling system according to one of the preceding claims, **characterized in that** the ER device (11) is configured as a thermoelectric generator.

15. Method for operating a cooling system for a vehicle, with a high temperature cooling circuit (HT cooling circuit, 3), by means of which an internal combustion engine (5) of the vehicle is cooled, at least one intercooler (7) being provided, by means of which the combustion air (23) which can be fed to the internal combustion engine (5) is cooled, an energy recuperation device (ER device, 11) being provided, by means of which energy is gained and/or generated from waste heat of the internal combustion engine (5), the ER device (11) having a heat-supplying heat exchanger (43), by means of which the waste heat of the internal combustion engine (5) can be fed to the ER device (11), and the ER device (11) having a heat-discharging heat exchanger (9), a low temperature cooling circuit (NT cooling circuit, 6) being provided which has a lower temperature than the HT cooling circuit (3) and by means of which both the at least one intercooler (7) and the heat-discharging heat exchanger (9) of the ER device (11) are cooled, the HT cooling circuit (3) and the NT cooling circuit (6) being connected to one another in terms of flow and configuring a combined cooling circuit, and at least one conveying device (12) being provided, by means of which a coolant of the combined cooling circuit can be conveyed through the combined cooling circuit, **characterized**
a) **in that** a valve device (47; 63; 65; 71; 73) is provided, by means of which the coolant flow through the combined cooling circuit can be controlled and/or regulated, the coolant flow through the HT cooling circuit (3) being released and the coolant flow through the NT cooling circuit (6) being shut off in a first valve position of the valve device (47; 63; 65; 71; 73), and the coolant flow through the HT cooling circuit (3) and the coolant flow through the NT cooling circuit (6) being released in a second valve position of the valve device (47; 63; 65; 71; 73), and
b) **in that** a bypass device (67) is provided, by means of which the coolant flow in the NT cooling circuit (6) can be guided and/or conducted past an intercooler region (69) of the NT cooling circuit (6), which intercooler region (69) has the at least one intercooler (7), the coolant flow through the further bypass device (67) being shut off in the first and second valve position of the valve device (65; 71; 73), and the coolant flow through the HT cooling circuit (3), through the NT cooling circuit (6) and through the bypass device (67) being released in a third valve position of the valve device (65; 71; 73),
or
**in that** a bypass device (67) is provided, by means of which the coolant flow in the NT cooling circuit (6) can be guided and/or conducted past an intercooler region (69) of the NT cooling circuit (6), which intercooler region (69) has the at least one intercooler (7), the coolant flow through the further bypass device (67) being shut off in the first and second valve position of the valve device (65; 71; 73), and the coolant flow through the HT cooling circuit (3), through the NT cooling circuit (6) and through the bypass device (67) being released in a third valve position of the valve device (65; 71; 73).

16. Vehicle, in particular commercial vehicle, with a cooling system according to one of Claims 1 to 14 and/or for carrying out a method according to Claim 15.

## Revendications

1. Système de refroidissement pour un véhicule, comportant un circuit de refroidissement haute température (circuit de refroidissement HT, 3), au moyen duquel un moteur à combustion interne (5) du véhicule peut être refroidi, dans lequel au moins un refroidisseur d'air de suralimentation (7) est prévu, au moyen duquel l'air de combustion (23) pouvant être acheminé au moteur à combustion interne (5) peut être refroidi, dans lequel un dispositif de récupération d'énergie (dispositif ER, 11) est prévu, au moyen duquel de l'énergie peut être obtenue et/ou peut être produite à partir d'une chaleur perdue du moteur à combustion interne (5), dans lequel le dispositif ER (11) comprend un échangeur de chaleur (43) acheminant de la chaleur, au moyen duquel la chaleur perdue du moteur à combustion interne (5) peut être acheminée au dispositif ER (11), dans lequel le dispositif ER (11) comprend un échangeur de chaleur (9) évacuant de la chaleur, dans lequel un circuit de refroidissement basse température (circuit de refroidissement NT, 6) présentant une température inférieure à celle du circuit de refroidissement HT (3) est prévu, circuit de refroidissement basse température au moyen duquel à la fois l'au moins un refroidisseur d'air de suralimentation (7) et l'échangeur de chaleur (9), évacuant de la chaleur, du dispositif ER (11) peuvent être refroidis, dans lequel le circuit de refroidissement HT (3) et le circuit de refroidissement NT (6) sont reliés fluidiquement l'un à l'autre et forment un circuit de refroidissement combiné, et dans lequel au moins un dispositif de refoulement (12) est prévu au moyen duquel un réfrigérant du circuit de refroidissement combiné peut être refoulé à travers le circuit de refroidissement combiné, **caractérisé**
**en ce qu'**un dispositif à soupape (47 ; 63 ; 65 ; 71 ; 73) est prévu, au moyen duquel le flux de réfrigérant à travers le circuit de refroidissement combiné peut être commandé et/ou peut être régulé et, dans une première position de soupape du dispositif à soupape (47 ; 63 ; 65 ; 71 ; 73), le flux de réfrigérant à travers le circuit de refroidissement HT (3) étant autorisé et le flux de réfrigérant à travers le circuit de refroidissement NT (6) étant bloqué et, dans une deuxième position de soupape du dispositif à soupape (47 ; 63 ; 65 ; 71 ; 73), le flux de réfrigérant à travers le circuit de refroidissement HT (3) et le flux de réfrigérant à travers le circuit de refroidissement NT (6) étant autorisés, et
**en ce qu'**un dispositif de dérivation (49) est prévu, au moyen duquel l'échangeur de chaleur (9), évacuant de la chaleur, du dispositif ER (11) peut être relié fluidiquement au circuit de refroidissement HT (3), de telle sorte que l'échangeur de chaleur (9), évacuant de la chaleur, du dispositif ER (11) peut être refroidi au moyen du circuit de refroidissement HT (3), le flux de réfrigérant à travers le dispositif de dérivation (49) étant bloqué dans la première et la deuxième position de soupape du dispositif à soupape (47 ; 63) et, dans une troisième position de soupape du dispositif à soupape (47, 63), le flux de réfrigérant à travers le circuit de refroidissement HT (3) et à travers le dispositif de dérivation (49) étant autorisé et le flux de réfrigérant à travers le circuit de refroidissement NT (6) étant bloqué.

2. Système de refroidissement selon la revendication 1, **caractérisé en ce que**, dans une quatrième position de soupape du dispositif à soupape (47, 63), le flux de réfrigérant à travers le circuit de refroidissement HT (3), à travers le dispositif de dérivation (49) et à travers le circuit de refroidissement NT (6) est autorisé.

3. Système de refroidissement selon la revendication 1 ou 2, **caractérisé en ce qu'**un autre dispositif de dérivation (51) est respectivement associé à chaque refroidisseur d'air de suralimentation (7), dispositif de dérivation au moyen duquel le flux de réfrigérant peut être guidé et/ou peut être dirigé devant le refroidisseur d'air de suralimentation (7), et **en ce qu'**un dispositif à soupape de refroidisseur d'air de suralimentation (53) est associé à chaque refroidisseur d'air de suralimentation (7), lequel dispositif à soupape, dans une première position de soupape, autorise le flux de réfrigérant à travers le refroidisseur d'air de suralimentation (7) et bloque le flux de réfrigérant à travers l'autre dispositif de dérivation (51) et, dans une deuxième position de soupape, bloque le flux de réfrigérant à travers le refroidisseur d'air de suralimentation (7) et autorise le flux de réfrigérant à travers l'autre dispositif de dérivation (53), le dispositif à soupape de refroidisseur d'air de suralimentation (53) étant de préférence réalisé sous forme de soupape à plusieurs voies en particulier réglable en continu.

4. Système de refroidissement pour un véhicule, comportant un circuit de refroidissement haute température (circuit de refroidissement HT, 3), au moyen duquel un moteur à combustion interne (5) du véhicule peut être refroidi, dans lequel au moins un refroidisseur d'air de suralimentation (7) est prévu, au moyen duquel l'air de combustion (23) pouvant être acheminé au moteur à combustion interne (5) peut être refroidi, dans lequel un dispositif de récupération d'énergie (dispositif ER, 11) est prévu, au moyen duquel de l'énergie peut être obtenue et/ou peut être produite à partir d'une chaleur perdue du moteur à combustion interne (5), dans lequel le dispositif ER (11) comprend un échangeur de chaleur (43) acheminant de la chaleur, au moyen duquel la chaleur perdue du moteur à combustion interne (5) peut être acheminée au dispositif ER (11), dans lequel le dispositif ER (11) comprend un échangeur de chaleur (9) évacuant de la chaleur, dans lequel un circuit de refroidissement basse température (circuit de refroidissement NT, 6) présentant une température inférieure à celle du circuit de refroidissement HT (3) est prévu, circuit de refroidissement basse température au moyen duquel à la fois l'au moins un refroidisseur d'air de suralimentation (7) et l'échangeur de chaleur (9), évacuant de la chaleur, du dispositif ER (11) peuvent être refroidis, dans lequel le circuit de refroidissement HT (3) et le circuit de refroidissement NT (6) sont reliés fluidiquement l'un à l'autre et forment un circuit de refroidissement combiné, et dans lequel au moins un dispositif de refoulement (12) est prévu au moyen duquel un réfrigérant du circuit de refroidissement combiné peut être refoulé à travers le circuit de refroidissement combiné, **caractérisé**
**en ce qu'**un dispositif à soupape (47 ; 63 ; 65 ; 71 ; 73) est prévu, au moyen duquel le flux de réfrigérant à travers le circuit de refroidissement combiné peut être commandé et/ou peut être régulé et, dans une première position de soupape du dispositif à soupape (47 ; 63 ; 65 ; 71 ; 73), le flux de réfrigérant à travers le circuit de refroidissement HT (3) étant autorisé et le flux de réfrigérant à travers le circuit de refroidissement NT (6) étant bloqué et, dans une deuxième position de soupape du dispositif à soupape (47 ; 63 ; 65 ; 71 ; 73), le flux de réfrigérant à travers le circuit de refroidissement HT (3) et le flux de réfrigérant à travers le circuit de refroidissement NT (6) étant autorisés, et
**en ce qu'**un dispositif de dérivation (67) est prévu, au moyen duquel le flux de réfrigérant dans le circuit de refroidissement NT (6) peut être guidé et/ou peut être dirigé devant une région de refroidisseur d'air de suralimentation (69) du circuit de refroidissement NT (6) comprenant l'au moins un refroidisseur d'air de suralimentation (7), le flux de réfrigérant à travers l'autre dispositif de dérivation (67) étant bloqué dans la première et la deuxième position de soupape du dispositif à soupape (65 ; 71 ; 73) et, dans une troisième position de soupape du dispositif à soupape (65 ; 71 ; 73), le flux de réfrigérant à travers le circuit de refroidissement HT (3), à travers le circuit de refroidissement NT (6) et à travers le dispositif de dérivation (67) étant autorisé.

5. Système de refroidissement selon l'une des revendications précédentes, **caractérisé en ce que** l'échangeur de chaleur (9), évacuant de la chaleur, du dispositif ER (11) est disposé en aval de l'au moins un refroidisseur d'air de suralimentation (7) dans le circuit de refroidissement NT (6), et **en ce qu'**au moins un échangeur de chaleur (17) refroidissant le circuit de refroidissement NT (6) est disposé dans le circuit de refroidissement NT (6) en amont de l'au moins un refroidisseur d'air de suralimentation (7).

6. Système de refroidissement selon l'une des revendications précédentes, **caractérisé en ce que** le réfrigérant peut être refoulé à travers le circuit de refroidissement combiné au moyen d'un dispositif de refoulement unique (12).

7. Système de refroidissement selon l'une des revendications 4 à 6, **caractérisé en ce que**, dans la troisième position de soupape, le flux de réfrigérant à travers la région de refroidisseur d'air de suralimentation (69) est autorisé, ou **en ce que**, dans la troisième position de soupape, le flux de réfrigérant à travers la région de refroidisseur d'air de suralimentation (69) est bloqué.

8. Système de refroidissement selon l'une des revendications 4 à 7, **caractérisé en ce que** si plusieurs refroidisseurs d'air de suralimentation (7) sont prévus, un autre dispositif de dérivation (51) est respectivement associé à chaque refroidisseur d'air de suralimentation (7), dispositif de dérivation au moyen duquel le flux de réfrigérant peut être guidé et/ou peut être dirigé devant le refroidisseur d'air de suralimentation (7), et **en ce qu'**un dispositif à soupape de refroidisseur d'air de suralimentation (53) est associé à chaque refroidisseur d'air de suralimentation (7), lequel dispositif à soupape, dans une première position de soupape, autorise le flux de réfrigérant à travers le refroidisseur d'air de suralimentation (7) et bloque le flux de réfrigérant à travers l'autre dispositif de dérivation (51) et, dans une deuxième position de soupape, bloque le flux de réfrigérant à travers le refroidisseur d'air de suralimentation (7) et autorise le flux de réfrigérant à travers l'autre dispositif de dérivation (51), le dispositif à soupape de refroidisseur d'air de suralimentation (53) étant de préférence réalisé sous forme de soupape à plusieurs voies en particulier réglable en continu.

9. Système de refroidissement selon l'une des revendications 4 à 7, **caractérisé en ce qu'**un dispositif à soupape de refroidisseur d'air de suralimentation (75) est associé respectivement à chaque refroidisseur d'air de suralimentation (7), dispositif à soupape au moyen duquel le flux de réfrigérant à travers le refroidisseur d'air de suralimentation (7) peut être autorisé et peut être bloqué, le dispositif à soupape de refroidisseur d'air de suralimentation (75) étant réalisé sous forme de soupape de passage, en particulier sous forme de thermostat, en particulier réglable en continu.

10. Système de refroidissement selon l'une des revendications précédentes, **caractérisé en ce que** le dispositif à soupape (47 ; 63 ; 65 ; 71 ; 73) est réalisé sous forme de soupape à plusieurs voies en particulier réglable en continu, ou **en ce que** le dispositif à soupape (47 ; 63 ; 65 ; 71 ; 73) est réalisé au moyen de plusieurs, en particulier de deux soupapes de passage et/ou de soupapes de passage réglables en continu.

11. Système de refroidissement selon l'une des revendications précédentes, **caractérisé en ce que** le circuit de refroidissement combiné comprend au moins deux régions de bifurcation (13, 14) au moyen desquelles le circuit de refroidissement NT (6) et le circuit de refroidissement HT (3) sont reliés fluidiquement l'un à l'autre, le flux de réfrigérant à travers le circuit de refroidissement NT (6) et le flux de réfrigérant à travers le circuit de refroidissement HT (3) pouvant être réunis au niveau d'une première région de bifurcation (13), le flux de réfrigérant pouvant être réparti entre le circuit de refroidissement NT (6) et le circuit de refroidissement HT (3) au niveau d'une deuxième région de bifurcation (14), et l'au moins un dispositif de refoulement (12) étant disposé en aval de la première région de bifurcation (13) et en amont de la deuxième région de bifurcation (14) dans le circuit de refroidissement combiné.

12. Système de refroidissement selon la revendication 11, **caractérisé en ce que** le moteur à combustion interne (5) et au moins un échangeur de chaleur (15) refroidissant le circuit de refroidissement HT (3) sont disposés dans le circuit de refroidissement HT (3) en amont de la première région de bifurcation (13) et en aval de la deuxième région de bifurcation (14), le moteur à combustion interne (5) étant de préférence disposé en amont de l'au moins un échangeur de chaleur (15) dans le circuit de refroidissement HT (3).

13. Système de refroidissement selon l'une des revendications précédentes, **caractérisé en ce que** le dispositif ER (11) est réalisé de telle sorte que l'énergie peut être obtenue et/ou peut être produite par le biais d'un processus thermodynamique, en particulier par le biais d'un processus cyclique de vapeur, de la chaleur pouvant être introduite dans le processus au moyen de l'échangeur de chaleur (43), acheminant de la chaleur, du dispositif ER (11), et de la chaleur pouvant être évacuée du processus au moyen de l'échangeur de chaleur (9), évacuant de la chaleur, du dispositif ER (11).

14. Système de refroidissement selon l'une des revendications précédentes, **caractérisé en ce que** le dispositif ER (11) est réalisé sous forme de générateur thermoélectrique.

15. Procédé de fonctionnement d'un système de refroidissement pour un véhicule, comportant un circuit de refroidissement haute température (circuit de refroidissement HT, 3), au moyen duquel un moteur à combustion interne (5) du véhicule est refroidi, dans lequel au moins un refroidisseur d'air de suralimentation (7) est prévu, au moyen duquel l'air de combustion (23) pouvant être acheminé au moteur à combustion interne (5) est refroidi, dans lequel un dispositif de récupération d'énergie (dispositif ER, 11) est prévu, au moyen duquel de l'énergie est obtenue et/ou est produite à partir d'une chaleur perdue du moteur à combustion interne (5), dans lequel le dispositif ER (11) comprend un échangeur de chaleur (43) acheminant de la chaleur, au moyen duquel la chaleur perdue du moteur à combustion interne (5) peut être acheminée au dispositif ER (11), et dans lequel le dispositif ER (11) comprend un échangeur de chaleur (9) évacuant de la chaleur, dans lequel un circuit de refroidissement basse température (circuit de refroidissement NT, 6) présentant une température inférieure à celle du circuit de refroidissement HT (3) est prévu, circuit de refroidissement basse température au moyen duquel à la fois l'au moins un refroidisseur d'air de suralimentation (7) et l'échangeur de chaleur (9), évacuant de la chaleur, du dispositif ER (11) sont refroidis, dans lequel le circuit de refroidissement HT (3) et le circuit de refroidissement NT (6) sont reliés fluidiquement l'un à l'autre et forment un circuit de refroidissement combiné, et dans lequel au moins un dispositif de refoulement (12) est prévu au moyen duquel un réfrigérant du circuit de refroidissement combiné peut être refoulé à travers le circuit de refroidissement combiné, **caractérisé**
a) **en ce qu'**un dispositif à soupape (47 ; 63 ; 65 ; 71 ; 73) est prévu, au moyen duquel le flux de réfrigérant à travers le circuit de refroidissement combiné peut être commandé et/ou peut être régulé et, dans une première position de soupape du dispositif à soupape (47 ; 63 ; 65 ; 71 ; 73), le flux de réfrigérant à travers le circuit de refroidissement HT (3) étant autorisé et le flux de réfrigérant à travers le circuit de refroidissement NT (6) étant bloqué et, dans une deuxième position de soupape du dispositif à soupape (47 ; 63 ; 65 ; 71 ; 73), le flux de réfrigérant à travers le circuit de refroidissement HT (3) et le flux de réfrigérant à travers le circuit de refroidissement NT (6) étant autorisés, et
b) **en ce qu'**un dispositif de dérivation (67) est prévu, au moyen duquel le flux de réfrigérant dans le circuit de refroidissement NT (6) peut être guidé et/ou peut être dirigé devant une région de refroidisseur d'air de suralimentation (69) du circuit de refroidissement NT (6) comprenant l'au moins un refroidisseur d'air de suralimentation (7), le flux de réfrigérant à travers l'autre dispositif de dérivation (67) étant bloqué dans la première et la deuxième position de soupape du dispositif à soupape (65 ; 71 ; 73) et, dans une troisième position de soupape du dispositif à soupape (65 ; 71 ; 73), le flux de réfrigérant à travers le circuit de refroidissement HT (3), à travers le circuit de refroidissement NT (6) et à travers le dispositif de dérivation (67) étant autorisé,
ou
**en ce qu'**un dispositif de dérivation (67) est prévu, au moyen duquel le flux de réfrigérant dans le circuit de refroidissement NT (6) peut être guidé et/ou peut être dirigé devant une région de refroidisseur d'air de suralimentation (69) du circuit de refroidissement NT (6) comprenant l'au moins un refroidisseur d'air de suralimentation (7), le flux de réfrigérant à travers l'autre dispositif de dérivation (67) étant bloqué dans la première et la deuxième position de soupape du dispositif à soupape (65 ; 71 ; 73) et, dans une troisième position de soupape du dispositif à soupape (65 ; 71 ; 73), le flux de réfrigérant à travers le circuit de refroidissement HT (3), à travers le circuit de refroidissement NT (6) et à travers le dispositif de dérivation (67) étant autorisé.

16. Véhicule, en particulier véhicule utilitaire, comprenant un système de refroidissement selon l'une des revendications 1 à 14 et/ou pour la mise en œuvre d'un procédé selon la revendication 15.
